(19) Europäisches Patentamt
European Patent Office
Office européen des brevets

(11) Veröffentlichungsnummer: **0 073 382 A2**

(12) # EUROPÄISCHE PATENTANMELDUNG

(21) Anmeldenummer: **82107369.9**

(22) Anmeldetag: **13.08.82**

(51) Int. Cl.³: **C 10 L 1/22**, C 10 M 1/32 // C09B29/085

(30) Priorität: **27.08.81 DE 3133926**

(43) Veröffentlichungstag der Anmeldung: **09.03.83 Patentblatt 83/10**

(84) Benannte Vertragsstaaten: **CH DE FR GB IT LI**

(71) Anmelder: **CASSELLA Aktiengesellschaft, Hanauer Landstrasse 526, D-6000 Frankfurt am Main 61 (DE)**

(72) Erfinder: **Bühler, Ulrich, Dr., Nidderauer Strasse 13, D-6369 Schöneck 1 (DE)**
Erfinder: **Hähnle, Reinhard, Dr., Kastanienweg 7a, D-6240 Königstein 3 (DE)**
Erfinder: **Ribka, Joachim, Dr., Rügener Strasse 4, D-6050 Offenbach (DE)**
Erfinder: **Richter, Helmut, Sälzer Weg 5, D-8756 Kahl/Main (DE)**

(74) Vertreter: **Urbach, Hans-Georg, Dr. et al, Hanauer Landstrasse 526, D-6000 Frankfurt am Main 61 (DE)**

(54) **Verfahren zum Färben von organischen Lösungsmitteln, Mineralölprodukten, Wachsen, Kunststoffen und Oberflächenbelägen.**

(57) Farbstoffe der allgemeinen Formel I

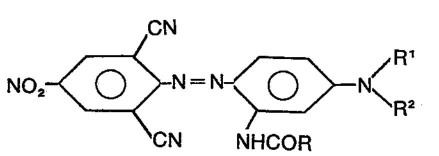
(I)

in der R Alkyl mit 1 bis 7 C-Atomen und $R^1$ und $R^2$ unabhängig voneinander Alkyl mit 1 bis 8 C-Atomen oder Alkenyl mit 3 oder 4 C-Atomen und $R^2$ zusätzlich Wasserstoff bedeuten, werden zum Färben von organischen Lösungsmitteln, Mineralölprodukten, Wachsen, Kunststoffen und Oberflächenbelägen verwendet.

EP 0 073 382 A2

Verfahren zum Färben von organischen Lösungsmitteln, Mineralölprodukten, Wachsen, Kunststoffen und Oberflächenbelägen

Die Erfindung betrifft ein Verfahren zum Färben von organischen Lösungsmitteln, Mineralölprodukten, Wachsen, Kunststoffen und Oberflächenbelägen, das dadurch gekennzeichnet ist, daß man Farbstoffe der allgemeinen Formel I

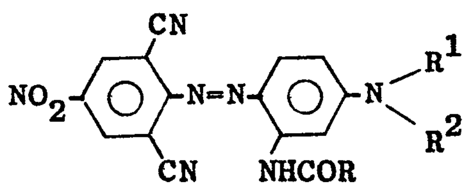

(I)

verwendet, in der R Alkyl mit 1 bis 7 C-Atomen und $R^1$ und $R^2$ unabhängig voneinander Alkyl mit 1 bis 8 C-Atomen oder Alkenyl mit 3 oder 4 C-Atomen und $R^2$ zusätzlich Wasserstoff bedeuten.

Alkylreste, die für $R^1$ und $R^2$ stehen können, sind z.B. Methyl, Ethyl, n-Propyl, i-Propyl, n-Butyl, i-Butyl, sek. Butyl, n-Pentyl, 2- und 3-Methylbutyl, n-Hexyl, n-Heptyl und 2-Ethylhexyl.

Alkenyl-Reste, die für $R^1$ und $R^2$ stehen können, sind Allyl, Crotyl und Methallyl.

Bevorzugte Reste für $R^1$ und $R^2$ sind Ethyl, n-Propyl, n-Butyl, i-Butyl und Allyl.

Alkylreste, die für R stehen können, sind z.B. Methyl, Ethyl, n-Propyl, i-Propyl, n-Butyl, i-Butyl, sek. Butyl, tert.Butyl, n-Pentyl, Pentyl-3, n-Hexyl, Heptyl-3.

Bevorzugte Reste für R besitzen 3 bis 7 C-Atome wie z.B. n-Propyl, i-Propyl, n-Butyl, i-Butyl, sek. Butyl, Pentyl-3 und Heptyl-3. Besonders bevorzugt für R sind Alkylreste mit 3 C-Atomen, insbesondere n-Propyl.

Bevorzugt für das erfindungsgemäße Verfahren sind Farbstoffe der Formel I, bei denen $R^2$ die gleiche Bedeutung wie $R^1$ besitzt. Insbesondere sind solche Farbstoffe der Formel I bevorzugt, bei denen $R^1$ gleich $R^2$ ist und Ethyl, n-Propyl, n-Butyl, i-Butyl oder Allyl bedeutet und R die oben angegebenen möglichst bevorzugten Bedeutungen hat.

Bevorzugte Farbstoffe der Formel I sind auch solche, bei denen R Methyl oder Ethyl bedeutet und die Summe der Kohlenstoffatome in den 3 Resten R, $R^1$ und $R^2$ zusammen mindestens 7, d.h. gleich 7 oder größer als 7, ist. Besonders bevorzugt sind derartige Farbstoffe, wenn außerdem $R^1$ gleich $R^2$ ist. Bevorzugte Farbstoffe der Formel I sind auch solche, bei denen $R^1$ Isopropyl oder sekundäres Alkyl mit 4 bis 8 C-Atomen und $R^2$ Wasserstoff bedeuten und die Summe der Kohlenstoffatome in den Resten $R^1$ und R zusammen mindestens 7 ist. Ganz besonders bevorzugt ist der Farbstoff der Formel I mit R = n-Propyl und $R^1$ = $R^2$ = Ethyl.

Die Farbstoffe der allgemeinen Formel I können in an sich bekannter Weise hergestellt werden, indem man ein Amin der Formel II

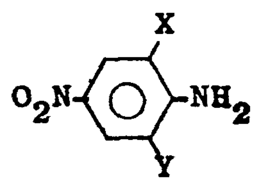

(II)

in der X für Cyan oder Halogen und Y für Halogen steht und Halogen Chlor, Brom oder Jod sein kann, diazotiert, auf ein Amin der Formel III

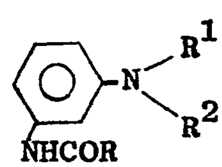

(III)

kuppelt und in der dadurch hergestellten Verbindung der allgemeinen Formel IV

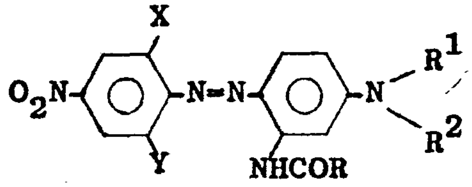

(IV)

X und/oder Y, sofern es für Halogen steht, gegen Cyan austauscht, wie es z.B. in den folgenden Deutschen Offenlegungsschriften 15 44 563, 23 10 745, 24 56 495, 26 10 675, 27 24 116, 27 24 117, 28 34 137, 28 34 386, 28 46 438, 29 15 072 und 29 31 081 beschrieben ist.

Darüber hinaus können die erfindungsgemäß einzusetzenden Farbstoffe auch entsprechend den Lehren des Tschechischen Patents 164 657 durch Diazotierung des Amins der Formel V

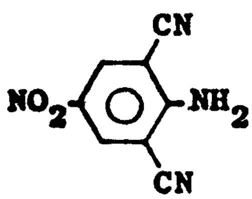

(V)

und Kupplung auf ein Amin der Formel III hergestellt werden, wobei es zweckmäßig ist, den so erhaltenen Farbstoff durch Kristallisation von Nebenprodukten zu reinigen.

Die Farbstoffe der allgemeinen Formel I sind zum Teil als Dispersionsfarbstoffe, insbesondere zum Färben von Polyesterfasern bekannt und werden z.B. in der DE-OS 19 63 735 und in der DE-OS 29 28 432 beschrieben.

Überraschenderweise wurde nun gefunden, daß sie hervorragend zum Färben von organischen Lösungsmitteln, Mineralölprodukten, Wachsen, Kunststoffen und Oberflächenbelägen geeignet sind, da sie unerwarteterweise eine hohe Löslichkeit, hohe Farbstärke und gute Echtheiten, insbesondere gute Lichtechtheit in diesen Medien besitzen.

Organische Lösungsmittel, die mit den Farbstoffen der Formel I gefärbt werden können, sind z.B. Alkohole wie z.B. Ethanol, Propanol, iso-Propanol, Butanol, i-Butanol, tert. Butanol; Ester wie z.B. Essigsäure-ethyl-, -propyl- oder -butyl-ester, Essigsäure-methoxy-ethyl-ester; Phthalsäure-di-butyl-ester, Phthalsäure-di-ethylhexyl-ester; Ketone wie z.B. Aceton,

Methyl-ethyl-keton, Di-ethyl-keton; Glykole und Glykoläther wie z B. Methylglykol, Ethylglykol, Methyldiglykol, Butyldiglykol; aromatische Kohlenwasserstoffe wie z.B. Toluol oder Xylole. Produkte, welche die vorgenannten Substrate enthalten und die demgemäß mit den Farbstoffen der Formel I gefärbt werden können, sind z.B. Druckfarben, Schreibtinten, Lacke wie z.B. Transparentlacke für den Flexodruck. Anfärbbare Mineralölprodukte sind z.B. Diesel- und Heizöle. Kunststoffe, die in der Masse gefärbt werden können, sind z.B. Polyvinylchlorid, Styrol-Butadiengemische, Acrylnitril-Butadiengemische, vor allem aber Polyolefine wie Polyethylen, Polypropylen, vorzugsweise Polystyrol. Beim Massefärben der genannten Kunststoffe in an sich bekannter Weise werden Färbungen mit hohen Farbstärken und ausgezeichneten Echtheiten, insbesondere hervorragender Licht- und Wetterechtheit, erhalten.
Bei dem erfindungsgemäßen Verfahren können auch Mischungen von zwei oder mehreren der Farbstoffe der Formel I verwendet werden. In der Regel liegt dabei der Anteil der Einzelfarbstoffe in der Mischung bei 10 bis 90 Gewichtsprozent.

Die organischen Lösungsmittel, Mineralölprodukte, Wachse, Kunststoffe und Oberflächenbeläge werden mit den Farbstoffen der Formel I dadurch gefärbt, daß die genannten Materialien im flüssigen, geschmolzenen oder thermoplastischen Zustand, z.B. bei Temperaturen von 0 bis 250°C, vorzugsweise 10 bis 240°C, mit einem oder mehreren Farbstoffen der Formel I vermischt werden, wobei unter rascher Auflösung des Farbstoffs oder der Farbstoffe innerhalb weniger Sekunden bis Minuten die Färbung des Substrats eintritt. Zu färbende Substrate, die bei Umgebungstemperatur flüssig sind, wie z.B. organische Lösungsmittel, Mineralölprodukte (Benzine, Dieselöle, Heizöle etc.), Oberflächenbeläge (Lacke, Firnisse, Farben etc.) werden in der Regel bei Temperaturen von 10 bis 30°C, vorzugsweise bei Umgebungstemperatur, mit dem Farbstoff der Formel I vermischt. Wachse schmelzen zum größten Teil bei Temperaturen von 50 bis 90°C und werden daher in der Regel bei dieser Temperatur mit den Farbstoffen der Formel I vermischt. Bei flüssigen Substraten wird der Farbstoff oder das Farbstoffgemisch in der Regel durch einfaches Einrühren mit dem flüssigen bzw. aufgeschmolzenen Substrat gemischt.

Die Färbung von Kunststoffen, insbesondere von Polystyrol, ist in verschiedenen Stadien der Kunststoffherstellung möglich, z.B. durch Färben der Monomeren vor der Polymerisation, Polykondensation oder Polyaddition. Normalerweise werden jedoch thermoplastische Kunststoffe während der Verarbeitung im thermoplastischen Zustand, z.B. auf dem Walzwerk, in der Knetschnecke, Strangpresse oder Schneckenspritzmaschine, mit dem Farbstoff oder Farbstoffgemisch bei Temperaturen bis 250°C, vorzugsweise bei Temperaturen bis 240°C, gemischt und dadurch eingefärbt. Bei diesem Vorgang können gleichzeitig auch Weichmacher, Stabilisatoren, Gleitmittel und/oder andere Hilfsmittel in den Kunststoff eingearbeitet werden. Danach wird der gefärbte Kunststoff in an sich bekannter Weise granuliert und an den Endverbraucher abgegeben. Thermoplastische Kunststoffe können auch vom Endverbraucher nach dem sogenannten Trockenfärbeverfahren gefärbt werden. Hierbei werden farblose Kunststoffgranulate mit dem Farbstoff oder Farbstoffgemisch trocken gemischt und anschließend in der Spritzgußmaschine zu gefärbten Spritzgußteilen verarbeitet.

Je nach der gewünschten Farbtiefe werden auf 1000 Gewichtsteile Substrat 0,001 bis 10, vorzugsweise 0,002 bis 5 Gewichtsteile Farbstoff oder Farbstoffgemisch angewandt. Es ist zumeist zweckmäßig, wenn der Farbstoff oder das Farbstoffgemisch nicht direkt in das zu färbende Stubstrat eingemischt wird, sondern wenn zunächst ein sogenannter Batch, d.h. eine konzentrierte Lösung oder Vormischung hergestellt wird und dieser Batch dann dem zu färbenden Substrat zugemischt wird. Die Konzentration des Farbstoffs bzw. des Farbstoffgemischs in dem Batch wird möglichst hoch gewählt. Sie beträgt in der Regel 10 bis 50 Gew.%, vorzugsweise 30 bis 50 Gew.%. Wenn als Trägersubstanz für den Batch ein organisches Lösungsmittel, ein bei Umgebungstemperatur flüssiges Mineralölprodukt oder ein anderes flüssiges Produkt verwendet wird, dann wird der Batch durch Einrühren des Farbstoffs in das flüssige Produkt

hergestellt. Wenn als Trägersubstanz für den Batch ein Kunststoff verwendet wird, dann wird der Batch so gefärbt, wie dies vorstehend für den Kunststoff beschrieben worden ist, nur wird bei der Herstellung des Batchs eine entsprechend höhere Farbstoffkonzentration gewählt.

Die nach dem erfindungsgemäßen Verfahren zu färbenden organischen Lösungsmittel, Mineralölprodukte, Wachse, Kunststoffe und Oberflächenbeläge können selbstverständlich auch noch andere Substanzen, beispielsweise Streck- oder Füllstoffe, Pigmente, Hilfsmittel, Stabilisierungsmittel, Harze und dgl. enthalten.

In den nachfolgenden Beispiele bedeuten Teile Gewichtsteile.

Beispiel 1:

5 Teile des Farbstoffs der Formel

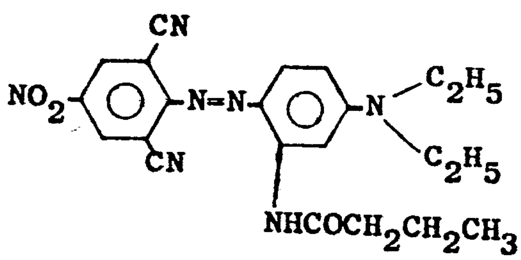

werden in einem Gemisch aus 37 Teilen Ethylacetat, 37 Teilen Methylethylketon und 20 Teilen eines Vinylchlorid-Vinylacetat-Copolymerisates (als Bindemittel) gelöst. Man erhält einen blau gefärbten Lack, der als Oberflächenbelag, z.B. für Aluminiumfolie, geeignet ist.

Der Farbstoff kann wie folgt hergestellt werden:

18,0 g Kupfer-I-cyanid werden mit 2,0 g Natriumcyanid in 150 ml Dimethylformamid 15 Minuten bei Raumtemperatur gerührt. Dann werden 54,1 g des Farbstoffs der Formel

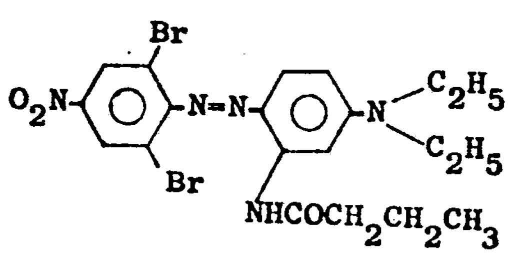

eingetragen und 15 Minuten auf 110°C bis 115°C erhitzt. Man rührt bis zum Erkalten, saugt ab, wäscht mit 20 ml Dimethylformamid, Wasser, 5%igem wäßrigen Ammoniak und wieder mit Wasser und trocknet unter vermindertem Druck.

Beispiel 2:

10 Teile des im Beispiel 1 genannten Farbstoffs werden in 200 Teilen Toluol gelöst. Die blaue Lösung läßt man unter Rühren in 2 000 000 Teile Heizöl einfließen, das auf diese Weise blau gefärbt wird.

Beispiel 3:

3 Teile des im Beispiel 1 genannten Farbstoffs werden in 67 Teilen Ethanol, 10 Teilen Propanol und 10 Teilen Ethylglykol gelöst.und als Bindemittel 10 Teile eines Styrol-Maleinsäure-Harzes zugemischt. Man erhält so eine blaue alkoholische Tinte für Schreibgeräte.

Beispiel 4:

3 Teile des Farbstoffs des Beispiels 1 werden in einem Gemisch aus 86 Teilen Toluol und 11 Teilen eines Styrol-Maleinsäureester-Harzes gelöst. Man erhält so eine blaue Tinte für Filzschreiber.

Beispiel 5:

0,5 Teile des im Beispiel 1 genannten Farbstoffs werden in einem Gemisch aus 8 Teilen n-Butanol, 4 Teilen Phthalsäure-di-ethylhexylester, 4 Teilen Phthalsäure-di-butylester, 34 Teilen Toluol, 35 Teilen Ethylglykol und 15 Teilen Collodiumwolle gelöst. Mit dieser Lösung wird weißes Papier bedruckt. Nach dem Trocknen erhält man einen farbstarken blauen Druck mit guten Echtheiten.

Beispiel 6:

0,5 Teile des im Beispiel 1 genannten Farbstoffs werden mit 1000 Teilen Polystyrol-granulat oder -pulver vermischt. Das erhaltene Gemisch wird geschmolzen, wobei sich der Farbstoff löst. Nach dem Erstarren erhält man eine tiefblau gefärbte Polystyrolmasse mit hervorragender Lichtechtheit.

In gleicher Weise wie in den Beispielen 1 bis 6 können die in der folgenden Tabelle durch Angabe der Substituenten gekennzeichneten Farbstoffe verwendet werden.

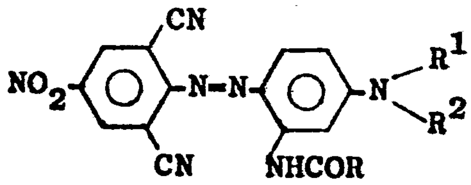

| R | $R^1$ | $R^2$ | Farbton |
|---|---|---|---|
| $C_2H_5$ | $C_2H_5$ | $C_2H_5$ | blau |
| $C_2H_5$ | $n-C_4H_9$ | $n-C_4H_9$ | blau |
| $C_2H_5$ | $CH(C_2H_5)C_4H_9$ | H | rotstichig blau |
| $C_2H_5$ | $CH_2CH(CH_3)_2$ | $C_2H_5$ | blau |
| $C_2H_5$ | $CH_2CH=CHCH_3$ | $CH_2CH=CHCH_3$ | blau |
| $n-C_3H_7$ | $CH_2CH=CH_2$ | $CH_2CH=CH_2$ | blau |
| $n-C_3H_7$ | $n-C_3H_7$ | $n-C_3H_7$ | blau |
| $n-C_3H_7$ | $n-C_4H_9$ | $n-C_4H_9$ | blau |
| $n-C_3H_7$ | $CH(CH_3)C_2H_5$ | H | rotstichig blau |
| $n-C_3H_7$ | $CH_3$ | $CH_2CH=CH_2$ | blau |
| $n-C_3H_7$ | $CH(CH_3)_2$ | $C_2H_5$ | blau |
| $n-C_3H_7$ | $n-C_6H_{13}$ | $n-C_6H_{13}$ | blau |
| $i-C_3H_7$ | $C_2H_5$ | $C_2H_5$ | blau |
| $i-C_3H_7$ | $n-C_3H_7$ | $n-C_3H_7$ | blau |
| $i-C_3H_7$ | $i-C_4H_9$ | $i-C_4H_9$ | blau |
| $i-C_3H_7$ | $CH(CH_3)C_3H_7$ | $CH_2CH=CH_2$ | blau |
| $i-C_3H_7$ | $n-C_5H_{11}$ | $n-C_5H_{11}$ | blau |
| $n-C_4H_9$ | $CH_3$ | $CH_3$ | blau |
| $n-C_4H_9$ | $n-C_3H_7$ | $n-C_3H_7$ | blau |
| $n-C_4H_9$ | $i-C_3H_7$ | $C_2H_5$ | blau |
| $n-C_4H_9$ | $CH(C_2H_5)_2$ | H | rotstichig blau |

| R | $R^1$ | $R^2$ | Farbton |
|---|---|---|---|
| $CH(CH_3)_3$ | $C_2H_5$ | $C_2H_5$ | rotstichig blau |
| $CH(CH_3)_3$ | $n-C_4H_9$ | $n-C_4H_9$ | rotstichig blau |
| $CH_2CH(CH_3)_2$ | $C_2H_5$ | $C_2H_5$ | blau |
| $CH_2CH(CH_3)_2$ | $CH_2CH=CH_2$ | $CH_2CH=CH_2$ | blau |
| $CH_2CH(CH_3)_2$ | $CH(C_2H_5)C_4H_9$ | H | rotstochig blau |
| $CH(CH_3)C_2H_5$ | $CH_3$ | $CH_3$ | blau |
| $CH(CH_3)C_2H_5$ | $n-C_3H_7$ | $n-C_3H_7$ | blau |
| $CH(CH_3)C_2H_5$ | $n-C_5H_{11}$ | $n-C_5H_{11}$ | blau |
| $CH(CH_3)C_2H_5$ | $C_2H_5$ | $CH_2CH=CH_2$ | blau |
| $n-C_5H_{11}$ | $C_2H_5$ | $C_2H_5$ | blau |
| $n-C_5H_{11}$ | $CH_2CH=CH_2$ | $CH_2CH=CH_2$ | blau |
| $n-C_5H_{11}$ | $CH(CH_3)C_2H_5$ | H | rotstichig blau |
| $CH(C_2H_5)_2$ | $C_2H_5$ | $C_2H_5$ | blau |
| $CH(C_2H_5)_2$ | $n-C_4H_9$ | $n-C_4H_9$ | blau |
| $CH(C_2H_5)_2$ | $CH_2CH=CH_2$ | $CH_2CH=CH_2$ | blau |
| $CH(C_2H_5)_2$ | $i-C_4H_9$ | $C_2H_5$ | blau |
| $CH(C_2H_5)_2$ | $CH(CH_3)C_2H_5$ | H | rotstichig blau |
| $n-C_6H_{13}$ | $C_2H_5$ | $C_2H_5$ | blau |
| $CH(C_2H_5)C_4H_9$ | $C_2H_5$ | $C_2H_5$ | blau |
| $CH(C_2H_5)C_4H_9$ | $CH_2CH=CH_2$ | $CH_2CH=CH_2$ | blau |
| $CH(C_2H_5)C_4H_9$ | $CH_2CH(CH_3)=CH_2$ | H | rotstichig blau |
| $CH(C_2H_5)C_4H_9$ | $n-C_4H_9$ | $n-C_4H_9$ | blau |
| $CH(C_2H_5)C_4H_9$ | $CH(C_2H_5)_2$ | H | rotstichig blau |
| $CH_3$ | $n-C_4H_9$ | $n-C_4H_9$ | blau |
| $CH_3$ | $n-C_6H_{13}$ | $n-C_6H_{13}$ | blau |
| $CH_3$ | $CH(C_2H_5)C_4H_9$ | H | rotstichig blau |
| $CH_3$ | $CH(C_2H_5)_2$ | $CH_2CH=CH_2$ | rotstichig blau |

<u>Patentansprüche</u>

1. Verfahren zum Färben von organischen Lösungsmitteln, Mineralölprodukten, Wachsen, Kunststoffen und Oberflächenbelägen, dadurch gekennzeichnet, daß man Farbstoffe der allgemeinen Formel I

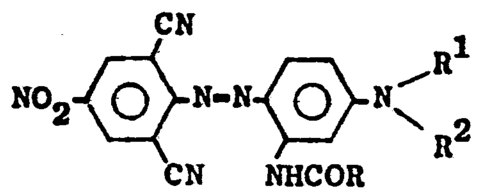

(I)

verwendet, in der R Alkyl mit 1 bis 7 C-Atomen und $R^1$ und $R^2$ unabhängig voneinander Alkyl mit 1 bis 8 C-Atomen oder Alkenyl mit 3 oder 4 C-Atomen und $R^2$ zusätzlich Wasserstoff bedeuten.

2. Verfahren gemäß Anspruch 1, dadurch gekennzeichnet, daß $R^1$ und $R^2$ die gleiche Bedeutung haben.

3. Verfahren nach Anspruch 1 oder 2, dadurch gekennzeichnet, daß $R^1$ gleich $R^2$ ist und Ethyl, n-Propyl, n-Butyl, i-Butyl oder Allyl bedeutet.

4. Verfahren nach einem oder mehreren der Ansprüche 1 bis 3, dadurch gekennzeichnet, daß R Alkyl mit 3 bis 7 C-Atomen bedeutet.

5. Verfahren nach einem oder mehreren der Ansprüche 1 bis 4, dadurch gekennzeichnet, daß R Alkyl mit 3 C-Atomen bedeutet.

6. Verfahren nach einem oder mehreren der Ansprüche 1 bis 5, dadurch gekennzeichnet, daß R n-Propyl bedeutet.

7. Verfahren nach einem oder mehreren der Ansprüche 1 bis 6, dadurch gekennzeichnet, daß $R^1$ und $R^2$ Ethyl und R n-Propyl bedeuten.

8. Verfahren nach einem oder mehreren der Ansprüche 1 bis 7, dadurch gekennzeichnet, daß Mischungen von zwei oder mehreren Farbstoffen der Formel I verwendet werden, wobei der Anteil der Einzelfarbstoffe in der Mischung bei 10 bis 90 Gewichtsprozent liegt.

9. Verfahren nach einem oder mehreren der Ansprüche 1 bis 8, dadurch gekennzeichnet, daß R Methyl oder Ethyl bedeutet und die Summe der Kohlenstoffatome in den 3 Resten R, $R^1$ und $R^2$ zusammen mindestens 7 ist.

10. Verfahren nach einem oder mehreren der Ansprüche 1 bis 8, dadurch gekennzeichnet, daß $R^1$ Isopropyl oder sekundäres Alkyl mit 4 bis 8 C-Atomen und $R^2$ Wasserstoff bedeuten und die Summe der Kohlenstoffatome in den Resten $R^1$ und R zusammen mindestens 7 ist.